# FASCICULE DE BREVET EUROPEEN

(11) **EP 1 407 151 B1**
(45) Date de publication et mention de la délivrance du brevet: **10.11.2004**
(21) Numéro de dépôt: 02780919.3
(22) Date de dépôt: 28.06.2002
(51) Int. Cl.: F16C 1/10, F16C 1/20, F16C 1/26

(54) **PROCEDE DE FABRICATION D'UN DISPOSITIF DE COMMANDE PAR CABLE SOUS GAINE ET DISPOSITIF DE COMMANDE OBTENU PAR CE PROCEDE**
VERFAHREN ZUR HERSTELLUNG EINER BOWDENZUG-BETÄTIGUNGSVORRICHTUNG UND SO ERHALTENE BETÄTIGUNGSVORRICHTUNG
METHOD OF PRODUCING A SHEATHED CABLE CONTROL DEVICE AND THE CONTROL DEVICE THUS OBTAINED

(30) Priorité: 29.06.2001 FR 0108621
(43) Date de publication de la demande: 14.04.2004
(73) Titulaire: Aliaxis R&D S.A.S., 78540 Vernouillet (FR)
(72) Inventeur: COMTE, Dominique, F-78410 Aubergenville (FR); MICHAUD, Claude, F-69100 Villeurbanne (FR); OURY, Jean-Claude, F-38440 Artas (FR); POLLET, Jean-Claude, F-78740 Vaux sur Seine (FR)
(74) Mandataire: Laget, Jean-Loup
(86) Numéro de dépôt international: PCT/FR2002/002245
(87) Numéro de publication internationale: WO 2003/002881

(56) Documents cités:
- EP-A- 0 438 745
- WO-A-94/07068
- DE-A- 2 032 959
- US-A- 3 434 501
- US-A- 3 657 942
- US-A- 4 099 425
- US-A- 5 356 340

## Description

La présente invention concerne le domaine des dispositifs de commande du type comprenant un câble flexible coulissant dans une gaine flexible, les extrémités de ladite gaine et du câble pouvant être fixées de manière démontable.

De tels dispositifs de commande, usuellement appelés câbles « Bowden », ont de multiples applications par exemple dans l'automobile pour la commande de volets de climatisation ou de chauffage, ou bien dans le bâtiment pour la commande d'un clapet de vidage d'un appareil sanitaire.

En général, le câble est métallique et la gaine est en fil métallique enroulé à spires jointives, éventuellement enrobé dans un film extérieur textile ou plastique. Ces dispositifs de commande connus sont lourds et onéreux et difficile à recycler . En outre, ils résistent mal à des environnements agressifs, par exemple une atmosphère humide.

Pour pallier ces inconvénients, on a proposé (voir par exemple US-A-3.657.942) de réaliser le câble et la gaine en matière synthétique en munissant l'intérieur de la gaine de nervures longitudinales afin de réduire les frottements. Un tel dispositif de commande, s'il est plus léger qu'un dispositif métallique, reste de prix de revient élevé et d'assemblage compliqué pour les composants de fixation.

On connaît par ailleurs, par WO 94/07068, un câble Bowden à gaine et câble en matière synthétique, dans lequel des pièces de fixation sont moulées par injection conjointement avec le câble et avec la gaine respectivement. Ce dispositif de commande connu évite la complication coûteuse d'un montage de pièces de fixation sur le câble et la gaine mais sa fabrication reste compliquée, en particulier en nécessitant des moules d'injection propres à chaque modèle.

La présente invention vise en conséquence à pallier les inconvénients des dispositifs de commande par câble sous gaine tout plastique connus grâce à un procédé de fabrication permettant d'obtenir, de manière très économique, des dispositifs de commande pré-assemblés de dimensions variables.

A cet effet, l'invention a pour premier objet un procédé de fabrication d'un dispositif de commande par câble sous gaine, ladite gaine et ledit câble étant en matière synthétique et étant munis à leurs deux extrémités d'organes de fixation, caractérisé par les étapes suivantes :
- fabrication par extrusion d'un tube de grande longueur en matière thermoplastique,
- fabrication par extrusion d'un jonc de grande longueur en matière thermoplastique,
- coupe du tube en éléments de gaine de longueur prédéterminée,
- coupe du jonc en éléments de câble de longueur prédéterminée,
- thermoformage ou formage par enlèvement de matière d'une butée de fixation à chaque extrémité des éléments de gaine,
- introduction d'un élément de câble à l'intérieur d'un élément de gaine,
- coulissement de l'élément de câble à l'intérieur de l'élément de gaine jusqu'à ce qu'il fasse saillie par rapport aux deux extrémités de l'élément de gaine et
- thermoformage d'une saillie d'ancrage à chaque extrémité saillante de l'élément de câble.

Le procédé selon l'invention offre l'avantage de permettre d'obtenir un dispositif de commande préassemblé, en partant de composants (tube extrudé et jonc extrudé) très économiques, les opérations de coupe, d'assemblage et de formation des moyens de fixation de la gaine et du câble pouvant être aisément automatisées avec des temps de cycle courts.

Selon un second objet, l'invention concerne un dispositif de commande par câble sous gaine, ladite gaine et ledit câble étant en matière synthétique et étant munis à leurs deux extrémités d'organes de fixation, fabriqué par le procédé précédent, caractérisé en ce que les organes de fixation sont d'une seule pièce respectivement avec la gaine et avec le câble.

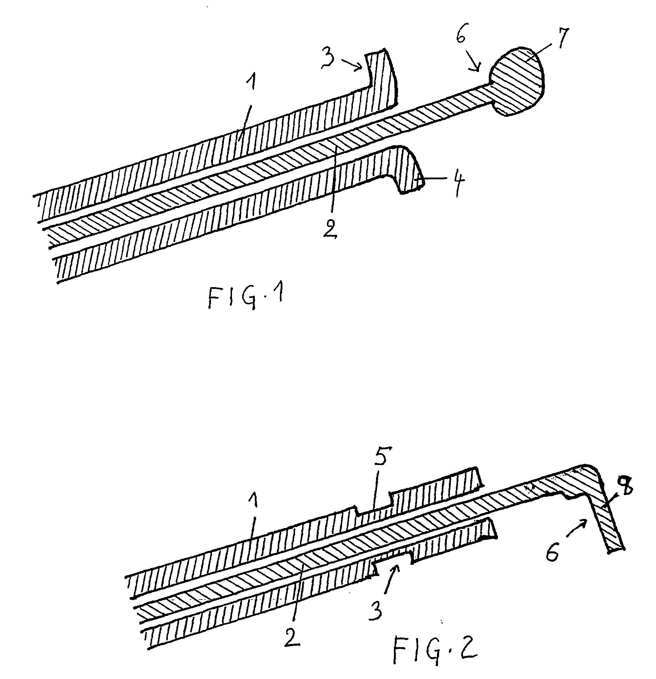

L'invention sera bien comprise à la lecture de la description suivante d'un exemple de réalisation d'un dispositif de commande, en référence au dessin annexé dont les figures 1 et 2 sont des vues schématiques en coupe axiale de respectivement deux variantes d'un dispositif de commande selon l'invention.

Le dispositif de commande selon l'invention est constitué d'une gaine 1 en matière thermoplastique dans laquelle coulisse un câble 2 également en matière thermoplastique.

La gaine 1 est constituée par une portion découpée dans un tube extrudé en matière thermoplastique. A chaque extrémité du tube est formée une butée de fixation 3 qui a été obtenue soit par formage à chaud d'une collerette d'extrémité 4 (figure 1) dans un moule ou par formage à chaud d'une rainure périphérique 5 (figure 2) ou d'encoches (forme de réalisation non représentée), soit par enlèvement de matière de la gaine.

Le câble 2 est formé par une portion d'un jonc extrudé en matière thermoplastique aux extrémités de laquelle est ménagée une saillie d'ancrage 6 qui est obtenue par moulage à chaud d'une sphère 7 (figure 1) ou d'une lentille ou d'un cylindre, par repli à chaud d'une extrémité 8 du câble 2 (figure 2) ou par tout autre procédé de déformation à chaud permettant d'obtenir une saillie adaptée à la fixation du câble 2.

Le procédé de fabrication du dispositif de commande qui vient d'être décrit est extrêmement simple.

On découpe dans un tube extrudé en matière thermoplastique des portions formant chacune une gaine 1 et on découpe dans un jonc extrudé en matière thermoplastique des portions formant chacune un câble 2.

On introduit le câble 2 dans la gaine 1 et on le fait coulisser jusqu'à ce que ses deux extrémités soient en saillie aux extrémités libres de la gaine 1.

On munit la gaine 1, de préférence avant introduction du câble 2, de ses butées de fixation 3 par une opération de thermoformage ou d'enlèvement de matière, comme indiqué précédemment. En variante et sans faire novation à l'invention, on aurait pu toutefois ménager les encoches servant de butée de fixation, par thermoformage ou par enlèvement de matière sur le tube avant la découpe en tronçons de gaine.

Le câble 2 étant introduit dans la gaine 1 et ses extrémités dépassant de la gaine 1, on ménage sur chacune des extrémités dépassantes la saillie d'ancrage 6 également par une opération de thermoformage. Cette opération peut être effectuée simultanément au thermoformage des butées de fixation 3 de la gaine 1, par un chauffage simultané des extrémités adjacentes de la gaine 1 et du câble 2.

Ces opérations peuvent être aisément automatisées, par exemple sur une machine automatique à carrousel.

Les matières thermoplastiques de la gaine 1 et du câble 2 peuvent être les mêmes, mais elles sont de préférence différentes pour obtenir un frottement réduit et une résistance mécanique optimale.

Les différents essais effectués ont amené à des résultats optimaux avec une gaine 1 en polyéthylène (PE) et avec un câble 2 en polyoxyméthylène (POM) homo ou copolymère.

Ces essais ont démontré une longévité extrémement élevée du câble selon l'invention avec un prix de revient très réduit par rapport à un dispositif de commande traditionnel.

## Revendications

1. Procédé de fabrication d'un dispositif de commande par câble sous gaine, ladite gaine et ledit câble étant en matière synthétique et étant munis à leurs deux extrémités d'organes de fixation,
**caractérisé par** les étapes suivantes :
- fabrication par extrusion d'un tube de grande longueur en matière thermoplastique,
- fabrication par extrusion d'un jonc de grande longueur en matière thermoplastique,
- coupe du tube en éléments de gaine (1) de longueur prédéterminée,
- coupe du jonc en éléments de câble (2) de longueur prédéterminée,
- thermoformage ou formage par enlèvement de matière d'une butée de fixation (3) à chaque extrémité des éléments de gaine (1),
- introduction d'un élément de câble (2) à l'intérieur d'un élément de gaine (1),
- coulissement de l'élément de câble (2) à l'intérieur de l'élément de gaine (1) jusqu'à ce qu'il fasse saillie par rapport aux deux extrémités de l'élément de gaine (1) et
- thermoformage d'une saillie d'ancrage (6) à chaque extrémité saillante de l'élément de câble (2).

2. Procédé selon la revendication 1,
**caractérisé en ce que** le thermoformage des butées de fixation (3) sur l'élément de gaine (1) est effectué avant l'introduction de l'élément de câble (2).

3. Procédé selon la revendication 1,
**caractérisé en ce que** le thermoformage des butées de fixation (3) sur l'élément de gaine (1) est effectué après l'introduction de l'élément de câble (2).

4. Procédé selon la revendication 3,
**caractérisé en ce que** le thermoformage des butées de fixation (3) sur l'élément de gaine (1) et le thermoformage des saillies d'ancrage (6) sur l'élément de câble (2) sont effectués simultanément.

5. Procédé selon l'une des revendications 1 à 4,
**caractérisé en ce que** les butées de fixation (3) de la gaine (1) ont la forme de collerettes d'extrémité (4).

6. Procédé selon l'une des revendications 1 à 4,
**caractérisé en ce que** les butées de fixation (3) de la gaine (1) ont la forme de rainures périphériques (5) ou d'encoches.

7. Procédé selon l'une des revendications 1 à 6,
**caractérisé en ce que** les saillies d'extrémité (6) du câble (2) ont la forme d'une sphère (7) d'une lentille ou d'un cylindre.

8. Procédé selon l'une des revendications 1 à 6,
**caractérisé en ce que** les saillies d'extrémité (6) du câble (2) ont la forme d'une extrémité repliée (8).

9. Procédé selon l'une des revendications 1 à 8,
**caractérisé en ce que** la matière thermoplastique de la gaine (1) est du polyéthylène.

10. Procédé selon l'une des revendications 1 à 9,
**caractérisé en ce que** la matière thermoplastique du câble (2) est du polyoxyméthylène homo ou copolymère.

## Claims

1. Method of fabrication of a control device by a sheathed cable, said sheath and said cable being formed from synthetic material and being provided, at their two ends, with securing members, said method being **characterised by** the following steps:
- manufacturing, by extrusion, a tube of great length formed from thermoplastic material;
- manufacturing, by extrusion, a trim of great length formed from thermoplastic material;
- cutting the tube into sheath elements (1) of predetermined length;
- cutting the trim into cable elements (2) of predetermined length;
- heat-shaping, or shaping by removal of material, a securing stop member (3) at each end of the sheath elements (1);
- introducing a cable element (2) into the interior of a sheath element (1);
- sliding the cable element (2) inside the sheath element (1) until it protrudes relative to the two ends of the sheath element (1); and
- heat-shaping an anchoring projection (6) at each projecting end of the cable element (2).

2. Method according to claim 1, **characterised in that** the heat-shaping of the securing stop members (3) on the sheath element (1) is effected prior to the introduction of the cable element (2).

3. Method according to claim 1, **characterised in that** the heat-shaping of the securing stop members (3) on the sheath element (1) is effected after the introduction of the cable element (2).

4. Method according to claim 3, **characterised in that** the heat-shaping of the securing stop members (3) on the sheath element (1) and the heat-shaping of the anchoring projections (6) on the cable element (2) are effected simultaneously.

5. Method according to one of claims 1 to 4, **characterised in that** the securing stop members (3) of the sheath (2) are in the form of end flanges (4).

6. Method according to one of claims 1 to 4, **characterised in that** the securing stop members (3) of the sheath (1) are in the form of peripheral grooves (5) or notches.

7. Method according to one of claims 1 to 6, **characterised in that** the end projections (6) of the cable (2) are in the form of a sphere (7) of a lens or of a cylinder.

8. Method according to one of claims 1 to 6, **characterised in that** the end projections (6) of the cable (2) are in the form of a bent-back end (8).

9. Method according to one of claims 1 to 8, **characterised in that** the thermoplastic material of the sheath (1) is polyethylene.

10. Method according to one of claims 1 to 9, **characterised in that** the thermoplastic material of the cable (2) is a polyoxymethylene homopolymer or copolymer.

## Patentansprüche

1. Verfahren zur Herstellung einer Bowdenzug-Betätigungsvorrichtung, wobei der Mantel und das Seil aus Kunststoff bestehen und an ihren zwei Enden mit Befestigungsorganen versehen sind, **gekennzeichnet durch** folgende Schritte:
- Herstellung eines Rohrs von großer Länge aus einem thermoplastischen Material **durch** Extrusion;
- Herstellung einer Stange von großer Länge aus einem thermoplastischen Material **durch** Extrusion;
- Schneiden des Rohrs in Mantelelemente (1) vorbestimmter Länge;
- Schneiden der Stange in Seilelemente (2) vorbestimmter Länge;
- Thermoformen oder Formen **durch** Materialabnahme eines Befestigungsanschlages (3) an jedem Ende der Mantelelemente (1);
- Einführung eines Seilelements (2) in das Innere eines Mantelelements (1);
- Schieben des Seilelements (2) innerhalb des Mantelelements (1), bis es in Bezug auf die beiden Enden des Mantelelements (1) herausragt und
- Thermoformen eines Verankerungsvorsprunges (6) an jedem herausragenden Ende des Seilelements (2).

2. Verfahren nach Anspruch 1, **dadurch gekennzeichnet, dass** das Thermoformen der Befestigungsanschläge (3) an dem Mantelelement (1) vor dem Einführen des Seilelements (2) erfolgt.

3. Verfahren nach Anspruch 1, **dadurch gekennzeichnet, dass** das Thermoformen der Befestigungsanschläge (3) an dem Mantelelement (1) nach dem Einführen des Seilelements (2) erfolgt.

4. Verfahren nach Anspruch 3, **dadurch gekennzeichnet, dass** das Thermoformen der Befestigungsanschläge (3) an dem Mantelelement (1) und das Thermoformen der Verankerungsvorsprünge (6) an dem Kabelelement (2) gleichzeitig erfolgen.

5. Verfahren nach einem der Ansprüche 1 bis 4, **dadurch gekennzeichnet, dass** die Befestigungsanschläge (3) des Mantels (1) die Form von Endkragen (4) aufweisen.

6. Verfahren nach einem der Ansprüche 1 bis 4, **dadurch gekennzeichnet, dass** die Befestigungsanschläge (3) des Mantels (1) die Form von umlaufenden Nuten (5) oder von Einkerbungen aufweisen.

7. Verfahren nach einem der Ansprüche 1 bis 6, **dadurch gekennzeichnet, dass** die Endvorsprünge (6) des Seiles (2) die Form einer Kugel (7), einer Linse oder eines Zylinders aufweisen.

8. Verfahren nach einem der Ansprüche 1 bis 6, **dadurch gekennzeichnet, dass** die Endvorsprünge (6) des Seiles (2) die Form eines umgebogenen Endes (8) aufweisen.

9. Verfahren nach einem der Ansprüche 1 bis 8, **dadurch gekennzeichnet, dass** es sich bei dem den Mantel (1) bildenden thermoplastischen Material um Polyethylen handelt.

10. Verfahren nach einem der Ansprüche 1 bis 9, **dadurch gekennzeichnet, dass** es sich bei dem das Seil (2) bildenden thermoplastischen Material um Polyoxymethylen oder Copolymer handelt.
